# EUROPEAN PATENT SPECIFICATION

(11) **EP 0 505 992 B1**
(45) Date of publication and mention of the grant of the patent: **20.03.1996**
(21) Application number: 92105070.4
(22) Date of filing: 24.03.1992
(51) Int. Cl.: C08F 6/08

(54) **Improved process for the removal of catalytic residues based on AlCl3 and/or complex compounds thereof**
Verbessertes Verfahren zur Entfernung von katalytischen Rückständen auf der Basis von AlCl3 und/oder dessen Komplexverbindungen
Procédé amélioré pour enlever le résidu catalytique à base de AlCl3 ou de ces complexes

(30) Priority: 26.03.1991 IT MI910810
(43) Date of publication of application: 30.09.1992
(73) Proprietor: ENICHEM S.p.A., I-20124 Milano (IT)
(72) Inventor: Magni, Ambrogio, Dr., I-22050 Paderno d'Adda, Como (IT); Sioli, Attilio, I-20153 Milan (IT); Andena, Claudia, I-20071 Casalpusterlengo, Milan (IT); Ponzinibbi, Mario, I-20077 Vizzolo Predabissi, Milan (IT)
(74) Representative: Weinhold, Peter, Dr.

(56) References cited:
- EP-A- 0 035 896
- EP-A- 0 412 597

## Description

The present invention relates to a process for the removal of catalytic residues based on AlCl₃ and/or its complex compounds from polymeric products obtained by Friedel-Crafts (co)polymerisation of ethylenically unsaturated hydrocarbons and mixtures thereof.

It is well-known that the term "Friedel-Crafts" refers to a group of reactions all related to each other by the common use of cationic catalytic systems based on the halides of Al, Fe, Zn, B, Sn and others; among said various reactions, alkylations, the synthesis of ketones and isomerization and polymerization reactions may be cited.

For the purposes of the present invention, the Friedel-Crafts reaction is defined as polymerization reaction induced by catalytic systems based on AlCl₃ and/or complex compounds thereof.

Examples of polymerizations induced by catalyst systems based on AlCl₃ are the polymerization of unsaturated hydrocarbon mixtures based on olefinic and diolefinic C₄-C₅ monomers and higher monomers of the aliphatic, cycloaliphatic and aromatic type.

Other examples of polymerizations induced by systems based on AlCl₃ are the polymerisation and copolymerization of naturally occuring monomers, such as terpenes, with other unsaturated organic compounds.

These polymerizations are generally carried out in flow reactors (although semi-flow or batch reactors may also be used) in the presence of an inert diluent (even if the use of a specific diluent is not absolutely necessary) and at temperatures generally higher than 0°C.

These polymerizations allow the preparation of hard and fragile resins, suitable for use in formulations for adhesives, inks and oils, some of which have intermediate characteristics between resins and oils.

The separation of the polymer from the reaction mixture involves the deactivation and removal of the catalytic residues present. Among the procedures known in the art are aqueous, acidic, neutral and basic treatments, as specified, e.g., in US-A-2,335,912, 2,391,293 and 1,938,320; and alcoholic and ammonia treatments as described, e.g., in US-A-1,939,932 and 2,287,535.

The main disadvantages of these processes are the formation of emulsions (when aqueous solutions are used) and the contamination of the hydrocarbon solvent (when alcohols are used) which must be removed before the solvent is used again in order to prevent the formation of stable, inactive complex compounds of AlCl₃ in the subsequent treatments.

Other known procedures involve the use of oxides and hydroxides, such as CaO, Ca(OH)₂, MgO and Mg(OH)₂, optionally in the presence of certain amounts of water, as described in US-A-2,734,892. In this case the most important disadvantages are the necessity of and the difficulties in filtering a solid residue which may be present in a gel-like form.

In IT-A-21493 A/89 there is described a process for the removal of catalytic residues based on aluminium trichloride from polymeric mixtures which involves the use of organometallic reagents, preferably a metal alkyl or metal hydride. Particularly, said process comprises the treatment of the mass resulting from the polymerization reaction with an organometallic reagent selected from metal alkyls and metal hydrides of at least one metal preferably selected from Al, Fe, Co, Ni and V, among which it is preferable to use at least one organometallic derivative of aluminium such as, for example, AlEt₃, AlEt₂,Cl and Al(i-Bu)₂H.

This process not only provides an effective removal of the catalytic residues from the polymerized mixtures but also allows the production of resins having a higher thermal stability and lighter colour as compared to resins not subjected to the treatment with said organometallic derivatives. The residual colour of these resins, although light, does not always render them suitable for the production of end products for which (almost) complete absence of colour is sometimes required.

On the other hand, it is well-known that the products obtained from the (co)polymerization of ethylenically unsaturated hydrocarbons or mixtures thereof with Friedel-Crafts catalysts have a colour which varies from light yellow to brown, depending on the composition of the feed to be polymerized and on the polymerization conditions. This makes them unsuitable for use in formulations for numerous commercial applications for which the absence of colour is required. Among the many processes known in the art for improving the colour of hydrocarbon resins, GB-A-835,788 demonstrates that the colour can advantageously be lightened by controlling the water content of the hydrocarbon fractions subjected to polymerization and the quantity of Friedel-Crafts catalyst used.

More recently, a process for the production of light-coloured resins has been described which involves keeping the content of cyclodienic monomers in the feed at values lower than 0.5% by weight (European patent application No. 82 301 558.1). Aromatic resins having a light colour and high thermal stability can be obtained by contacting the feed to be polymerized with a dienophilic product before polymerization (US-A-4,102,843 and 4,230,840).

More specifically, basically colourless resins can be obtained by the cationic polymerization of pure monomers. For example, beta-pinene is transformed into a colourless resin by polymerization with catalytic quantities of an organometallic halogen-free compound of aluminium, activating the system by the addition of controlled quantities of water and subsequent addition of an organic halide (European patent application No. 84 308 674.5).

Light-coloured resins can also be obtained by means of the catalytic hydrogenation of hydrocarbon resins produced by cationic polymerization with Friedel-Crafts catalysts (GB-A-1,176,443); however this method has evident disadvantages, the most important ones being a change in the main physico-chemical and performance characteristics and the rapid loss of activity of the hydrogenation catalyst.

It, therefore, is evident that a general solution to the problem of making available colourless hydrocarbon resins, obtained by the cationic (co)polymerisation of unsaturated hydrocarbons, which satisfies the increasing demand for quality in the various fields of application, has not yet been found.

The present invention, therefore, relates to a process of a completely general nature, for the production of colourless and thermally stable resins from the Friedel-Crafts (co)polymerization products of ethylenically unsaturated hydrocarbons and mixtures thereof which overcomes the above-mentioned drawbacks of the known art. The present invention also relates to the resins thus obtained.

It has surprisingly been found that the treatment of the mass resulting from the Friedel-Crafts polymerization with a specific organometallic compound, i.e., diisobutyl-aluminium-monohydride and/or diethyl-aluminium-monohydride, under suitable conditions results in basically colourless hydrocarbon resins having a high thermal stability, all the other physico-chemical and performance characteristics of the resins remaining practically unchanged.

The above two organometallic compounds in fact serve to eliminate the catalytic residues present in the polymeric products obtained via Friedel-Crafts, as do the organometallic compounds described in the above-mentioned IT-A-21493 A/89. However, they additionally result in basically colourless or very lightly-coloured resins with a high thermal stability, leaving all the other physico-chemical and performance characteristics of the resins practically unchanged.

In accordance with this, the first aspect of the present invention relates to a process for the removal of catalytic residues from and the decolourization of resins obtained by the Friedel-Crafts (co)polymerization of ethylenically unsaturated hydrocarbons, which comprises the following basic steps:
(a) treatment of the polymerization mixture with an organometallic compound selected from diisobutyl-aluminium-monohydride, diethyl-aluminium-monohydride and mixtures thereof at a temperature from 20°C to 70°C;
b) treatment of the mixture resulting from step (a) with water or an acidic or basic aqueous solution;
   and
(c) separation and recovery of the organic phase.
With this process it is possible to obtain colourless or very light-coloured resins having a high thermal stability, which resins form another object of the present invention.

The treatment of the mixture resulting from the polymerization reaction with the above organometallic derivatives is carried out at temperatures ranging from +20°C to +70°C. Most preferably it is carried out at room temperature.

The quantity of organometallic reagent used is related to the quantity of Friedel-Crafts catalyst (i.e. AlCl₃ and/or complex compounds thereof) used in the polymerization. A molar ratio organometallic compound(s)/Friedel-Crafts catalyst which is higher than 0.2/1 is generally used, although to enhance the effects of the treatment, it is preferable to operate with a molar ratio which is higher than 0.5/1 (e.g. from 0.5/1 to 3/1 or higher).

The reaction pressure is not critical and can be either subatmospheric, atmospheric or superatmospheric. The reaction is generally carried out at the autogenous pressure generated in the reactor under the required operating conditions. The reaction time is also not of particular importance and usually ranges from a few minutes to 2 or more hours, during which a progressive clarification of the reaction mass takes place. The treatment may be carried out in flow, semi-flow or batch reactors.

The organometallic compound can be used both neat and in a solution in an inert diluent. Typical examples of inert diluents are aliphatic hydrocarbons such as pentane, hexane and heptane and aromatic hydrocarbons such as toluene and benzene.

In step (b) the resulting product is then treated with a (preferably about) equal volume of water or an aqueous solution of an acid or base (preferably NaOH) which preferably has a concentration of from 0.5 to 5 N. The temperature at which said treatment is carried out usually is the same as in step (a) and preferably is room temperature. Vigorous stirring and times ranging from 5 minutes to 1 hour are of particular advantage. Treatment with an about 4 N aqueous solution of sodium hydroxide is particularly preferred.

The isolated (e.g. decanted) organic phase may then be distilled in a flow of steam heated to 250°C and in an inert nitrogen atmosphere to separate the volatile organic residues from the resin.

The following examples are to further illustrate the present invention.

All parts and percentages given therein are expressed by weight, if not specified otherwise.

### EXAMPLE 1 (Comparative)

850 g of a selected steam-cracking cut of hydrocarbon monomers, having the composition shown in column (I) of Table 1, are charged into a 2 l glass reactor equipped with cooling jacket and mechanical stirrer.

Maintaining the temperature of the reagent mixture at between +15 and +30°C by the circulation of a cooling liquid, 10.2 g of AlCl₃ (76 mmoles), in the form of a complex with HCl and xylene and prepared separately by bubbling hydrochloric acid into a suspension of aluminium trichloride and xylene in a molar ratio of 1:1, are charged into the reactor under stirring; the mixture is left to react for 40 minutes.

The polymerised mixture is then transferred to a 3 l glass flask equipped with a mechanical stirrer and containing 800 g of a vigorously stirred 4 N aqueous solution of sodium hydroxide. After 30 minutes of treatment the stirring is discontinued and the organic phase is left to separate from the aqueous phase.

The resin is then separated from the polymeric solution by stripping the volatiles in a steam flow at 250°C.

The properties of the resin obtained are shown in Table 2.

### EXAMPLE 2

850 g of the hydrocarbon cut having the composition shown in column (I) of Table 1 are polymerized under the same conditions as described in example 1.

At the end of the polymerization, 39 ml of a 1 molar solution of diisobutyl-aluminium-monohydride in hexane are added to the polymerized mixture and left to react therewith for 15 minutes, keeping the temperature at +20°C.

The clarified mixture, after the treatment with diisobutyl-aluminium-monohydride, is then transferred to a 3 l glass flask equipped with mechanical stirrer and containing 800 g of a vigorously stirred 4 N aqueous solution of sodium hydroxide.

After 30 minutes of treatment, the stirring is discontinued and the organic phase is left to separate from the aqueous phase. The resin is then separated from the filtered organic phase by stripping the volatiles in a steam flow at 250°C.

The properties of the resin obtained are shown in Table 2.

### EXAMPLE 3

The procedure described in example 2 is followed, using 77 ml of the 1 molar solution of diisobutyl-aluminium-monohydride.

The properties of the resin obtained are shown in Table 2.

### EXAMPLE 4

The procedure described in example 2 is followed, using 154 ml of the 1 molar solution of diisobutyl-aluminium-monohydride.

The properties of the resin obtained are shown in Table 2.

### EXAMPLES 5 TO 7

The procedure followed is the same as in examples 2 to 4, but using diethyl-aluminium-monohydride instead of diisobutyl-aluminium-monohydride.

The properties of the resins obtained are shown in Table 2.

As examples of less effective organometallic compounds as compared to the alkyl-aluminium-hydrides employed according to the present invention the following examples demonstrate the use of aluminium trialkyls and diethyl aluminium chloride.

### EXAMPLES 8 TO 10 (Comparative)

The procedure followed is the same as in examples 2 to 4, but using triisobutyl aluminium instead of diisobutyl-aluminium-monohydride.

The properties of the resins obtained are shown in Table 3.

### EXAMPLES 11 TO 13 (Comparative)

The procedure followed is the same as in examples 2 to 4, but using triethyl aluminium instead of diisobutyl-aluminium-monohydride.

The properties of the resins obtained are shown in Table 3.

### EXAMPLES 14 TO 16 (Comparative)

The procedure followed is the same as in examples 2 to 4, but using diethyl aluminium chloride instead of diisobutyl-aluminium-monohydride.

The properties of the resins obtained are shown in Table 4.

As examples where unsaturated fractions different from those of examples 1 to 16 are used, the following examples 17 and 18 describe polymerizations of terpene and piperylene fractions with subsequent treatment with diisobutyl-aluminium-monohydride.

### EXAMPLE 17 (comparative)

850 g of a mixture containing beta-pinene and having the composition shown in column (III) of Table 1 are charged into a 2 l glass reactor equipped with cooling jacket and mechanical stirrer. The mixture is polymerized at a temperature ranging from 35 to 78°C by adding 1.04 g of AlCl₃ (7.8 mmoles) in the form of a complex with HCl and xylene (prepared according to the procedure described in example 1).

After 50 minutes, the polymerized mixture is transferred to a 3 l glass flask equipped with mechanical stirrer and containing 800 g of vigorously stirred 4 N aqueous solution of sodium hydroxide. After 30 minutes of treatment, the stirring is discontinued and the organic phase is left to separate from the aqueous phase. The resin is then separated from the polymeric solution by stripping the volatiles in a steam flow at 250°C.

The properties of the resin obtained are shown in Table 5.

### EXAMPLE 18

850 g of a mixture containing beta-pinene and having the composition shown in column (III) of Table 1 are polymerized under the same conditions as in example 17.

At the end of the polymerization, 15.5 ml of a 1 molar solution of diisobutyl-aluminium-monohydride in hexane are added and the mixture is left to react for 15 minutes at a constant temperature of +30°C.

The mixture clarified by the treatment with diisobutyl-aluminium-monohydride is then transferred into a 3 1 glass flask equipped with mechanical stirrer and containing 800 g of a vigorously stirred 4 N aqueous solution of sodium hydroxide.

After 30 minutes of treatment the stirring is discontinued and the organic phase is left to separate from the aqueous phase. The resin is separated from the organic phase, after settling, by stripping the volatiles in a steam flow at 250°C.

The properties of the resin obtained are shown in Table 5.

### EXAMPLE 19

The procedure of example 2 is followed, using 850 g of a mixture having the composition shown in column (II) of Table 1.

The properties of the resin obtained are shown in Table 5.

### EXAMPLE 20

The procedure of example 4 is followed, using 850 g of a mixture having the composition shown in column (II) of Table 1.

The properties of the resin obtained, which is practically colourless, are shown in Table 5.

**TABLE 1**

| Components | (I) (%weight) | (II) (%weight) | (III) (%weight) |
|---|---|---|---|
| 1-butene + isobutene | 1.60 | --- | --- |
| 1,3 butadiene | 2.98 | --- | --- |
| n-butane | 0.32 | --- | --- |
| trans-2-butene | 0.99 | --- | --- |
| cis-2-butene | 1.28 | --- | --- |
| 1,2-butadiene | 0.40 | --- | --- |
| 3-methyl-1-butene | 2.11 | --- | --- |
| isopentane | 7.72 | --- | --- |
| 1,4-pentadiene | 5.75 | --- | --- |
| 2-butine | 0.74 | --- | --- |
| 1-pentene | 10.54 | 0.88 | --- |
| 2-methyl-1-butene | 2.90 | 0.22 | --- |
| n-pentane | 18.56 | 1.89 | --- |
| isoprene | 10.99 | 0.17 | --- |
| trans-2-pentene | 7.50 | 0.70 | --- |
| cis-2-pentene | 3.50 | 0.73 | --- |
| 2-methyl-2-butene | 1.85 | 40.21 | --- |
| trans-1,3-pentadiene | 6.81 | 10.57 | --- |
| cyclopentadiene | 0.94 | 0.28 | --- |
| cis-1,3-pentadiene | 3.49 | 7.80 | --- |
| cyclopentene | 5.70 | 5.04 | --- |
| hexane | --- | 28.45 | --- |
| xylene | --- | --- | 71.83 |
| beta-pinene | --- | --- | 23.29 |
| various terpenes | --- | --- | 4.88 |
| various saturated products | 3.33 | 3.06 | --- |

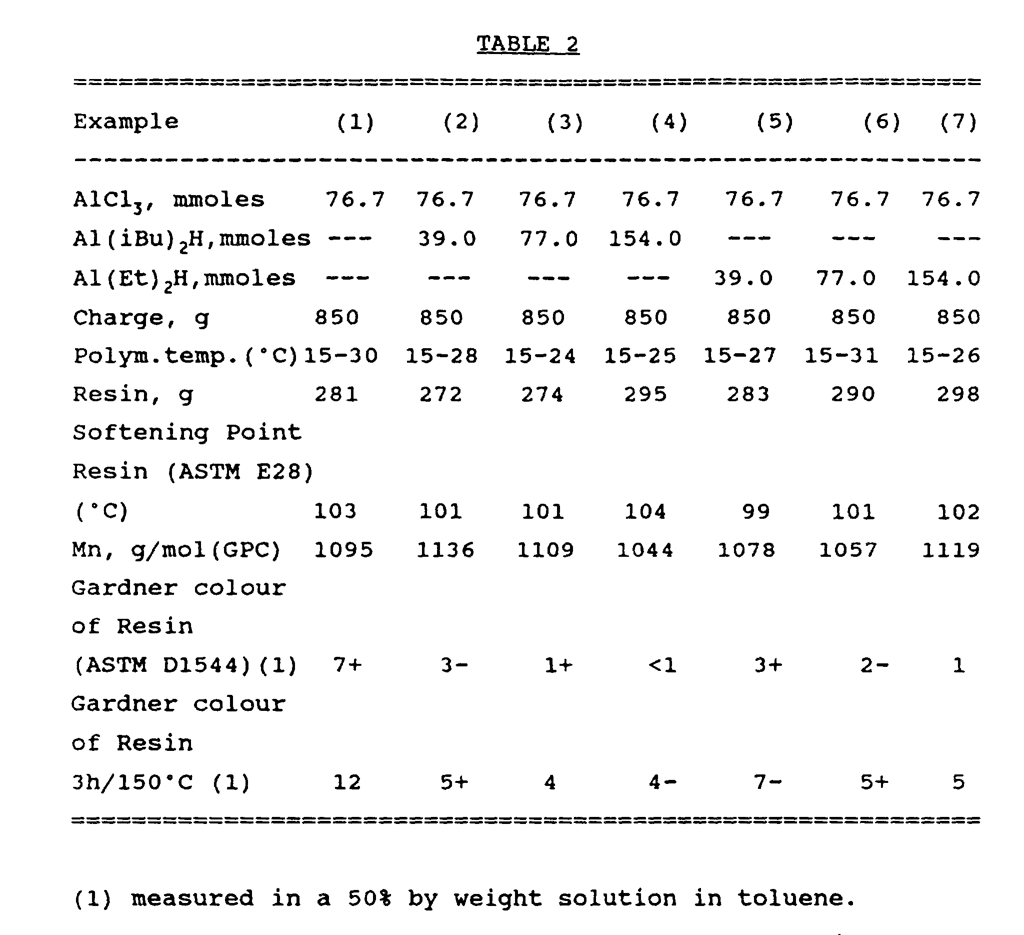

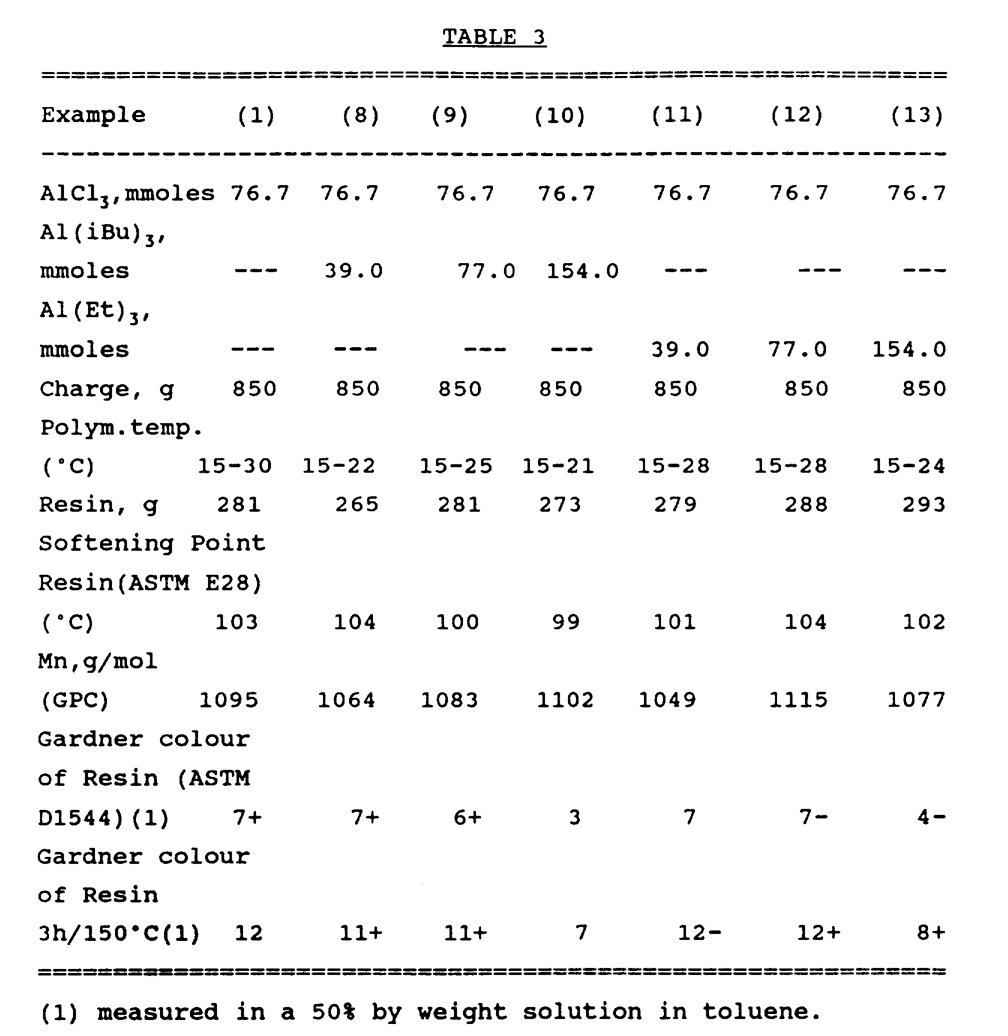

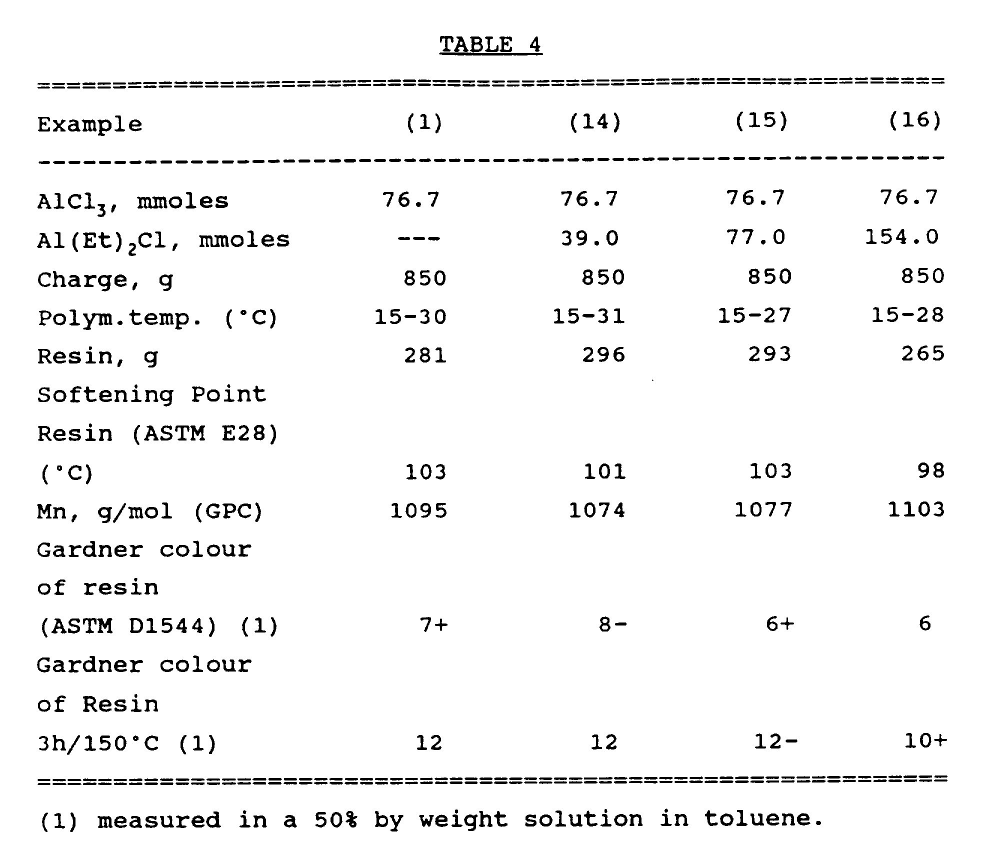

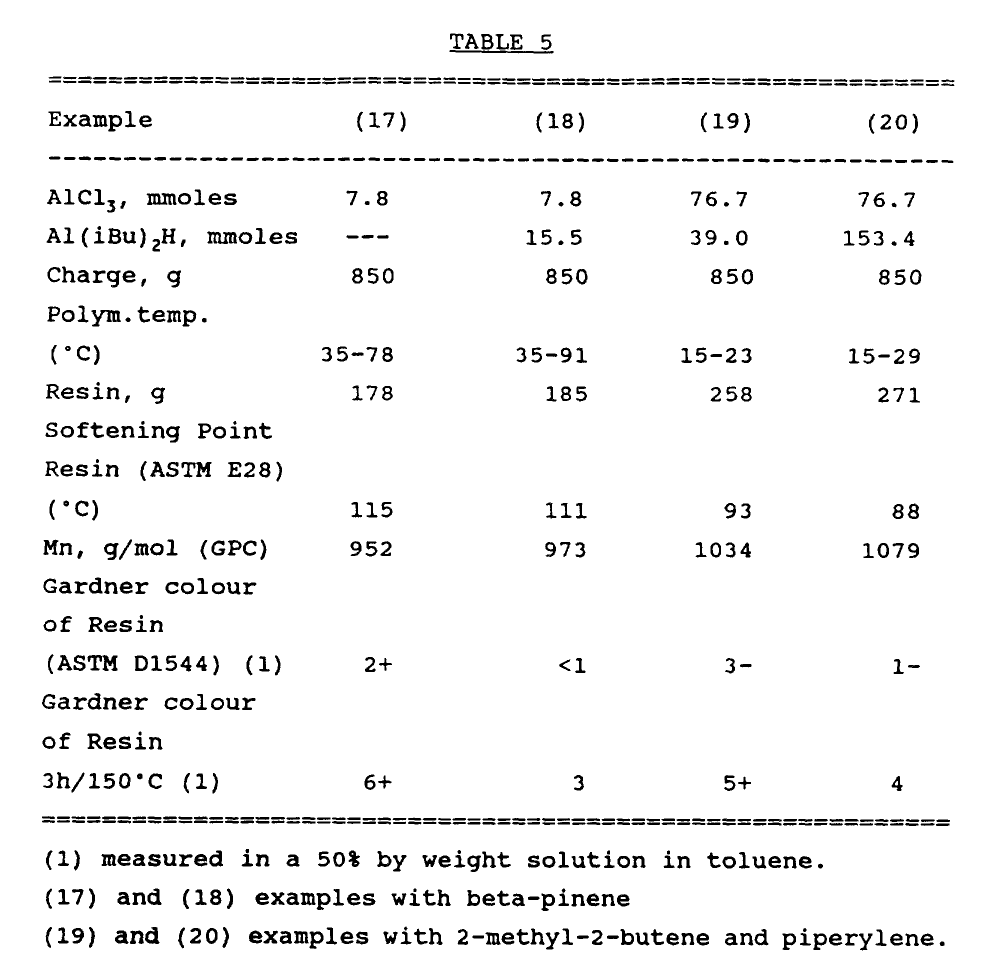

## Claims

1. Process for the removal of catalytic residues and the simultaneous decolouring of polymeric resins obtained by Friedel-Crafts (co)polymerization of ethylenically unsaturated hydrocarbons, comprising the following basic steps:
(a) treatment of the polymerization mixture with an organometallic compound selected from diisobutyl-aluminium-monohydride, diethyl-aluminium-monohydride and mixtures thereof at a temperature from 20°C to 70°C;
b) treatment of the mixture resulting from step (a) with water or an acidic or basic aqueous solution;
and
(c) separation and recovery of the organic phase.

2. Process according to claim 1, wherein step (a) is carried out with a molar ratio of organometallic compound(s) to Friedel-Crafts catalyst which is higher than 0.2:1, particularly higher than 0.5:1.

3. Process according to any one of claims 1 and 2, wherein step (b) is carried out with an aqueous acid or base solution having a normality of from 0.5 to 5.0 N, particularly from 1 to 4 N.

4. Process according to any one of claims 1 to 3, wherein step (b) is carried out with an aqueous solution of sodium hydroxide, particularly a 4 N solution.

## Patentansprüche

1. Verfahren zur Entfernung von katalytischen Rückständen und zur gleichzeitigen Entfärbung von polymeren Harzen, erhalten durch Friedel-Crafts-(Co)polymerisation von ethylenisch ungesättigten Kohlenwasserstoffen, das die folgenden Grundschritte umfaßt:
(a) Behandlung der Polymerisationsmischung mit einer metallorganischen Verbindung, ausgewählt aus Diisobutyl-aluminium-monohydrid, Diethylaluminium-monohydrid und Mischungen von diesen bei einer Temperatur von 20° C bis 70 ° C;
(b) Behandlung der aus Schritt (a) hervorgehenden Mischung mit Wassser oder einer sauren oder basischen wässrigen Lösung und
(c) Abtrennung und Wiedergewinnung der organischen Phase.

2. Verfahren nach Anspruch 1, worin Schritt (a) in einem Molverhältnis von metallorganischer Verbindung(en) zu dem Friedel-Crafts-Katalysator durchgeführt wird, das höher als 0,2:1, insbesondere höher als 0,5: 1 ist.

3. Verfahren nach einem der Ansprüche 1 oder 2, worin Schritt (b) mit einer wässrigen sauren oder basischen Lösung mit einer Normalität von n = 0,5 bis 5,0, insbesondere von 1 bis 4 n, durchgeführt wird.

4. Verfahren nach einem der Ansprüche 1 bis 3, worin Schritt (b) mit einer wässrigen Lösung von Natriumhydroxid, insbesondere einer 4 n-Lösung, durchgeführt wird.

## Revendications

1. Procédé permettant simultanément d'éliminer des résidus catalytiques et de décolorer des résines polymères obtenues par (co)polymérisation de Friedel et Crafts d'hydrocarbures à insaturation éthylénique, comportant les étapes principales suivantes :
(a) traitement du mélange de polymérisation avec un composé organométallique choisi parmi le monohydrure de diisobutylaluminium, le monohydrure de diéthylaluminium et les mélanges de ces derniers, à une température de 20° C à 70° C;
(b) traitement du mélange résultant de l'étape (a) avec de l'eau ou une solution aqueuse basique ou acide ;
et
(c) séparation et récupération de la phase organique.

2. Procédé selon la revendication 1, dans lequel l'étape (a) est effectuée avec un rapport molaire du composé ou des composés organométalliques au catalyseur de Friedel et Crafts, qui est supérieur à 0,2:1, en particulier supérieur à 0,5:1.

3. Procédé selon l'une quelconque des revendications 1 et 2, dans lequel l'étape (b) est effectuée avec une solution aqueuse acide ou basique présentant une normalité de 0,5 à 5,0 N, en particulier de 1 à 4 N.

4. Procédé selon l'une quelconque des revendications 1 à 3, dans lequel l'étape (b) est effectuée avec une solution aqueuse d'hydroxide de sodium, en particulier une solution de normalité 4 N.
